# EUROPÄISCHE PATENTANMELDUNG

(11) **EP 1 724 549 A2**
(43) Veröffentlichungstag der Anmeldung: **22.11.2006**
(21) Anmeldenummer: 06008915.8
(22) Anmeldetag: 28.04.2006
(51) Int. Cl.: G01B 11/00

(54) **Verfahren zum Bestimmen der 3D-Koordinaten der Oberfläche eines Objekts**

(30) Priorität: 18.05.2005 DE 102005022865; 14.09.2005 DE 102005043912
(71) Anmelder: Steinbichler Optotechnik GmbH, 83115 Neubeuern (DE)
(72) Erfinder: Steinbichler, Marcus, 83115 Neubeuern (DE); Maidhof, Armin, 83101 Rohrdorf (DE); Prams, Matthias, 83064 Raubling (DE); Leitner, Markus, 83101 Lauterbach (DE)
(74) Vertreter: Zinnecker, Armin

(57) **Zusammenfassung**

Ein Verfahren dient zum Bestimmen der 3D-Koordinaten eines Objekts. Die 3D-Koordinaten einer Teil-Oberfläche (6) des Objekts werden durch ein 3D-Meßgerät (3) bestimmt, das einen oder mehrere Detektoren (4) aufweist und dessen Position durch ein Trackingsystem bestimmt wird. Die 3D-Koordinaten einer benachbarten Teil-Oberfläche (7) des Objekts werden durch das 3D-Meßgerät (3) bestimmt. Die 3D-Koordinaten eines Überlappungsbereichs der benachbarten Teil-Oberflächen (6, 7) werden durch ein Matching-Verfahren zusammengesetzt. Dabei wird eine Fehlerfunktion bestimmt und iterativ minimiert. Ferner wird die Fehlerfunktion eines Detektors (4) des 3D-Meßgeräts (3) bestimmt (Fig. 2).

## Beschreibung

Die Erfindung betrifft ein Verfahren zum Bestimmen der 3D-Koordinaten der Oberfläche eines Objekts.

Verfahren dieser Art sind bereits bekannt.

Aus der EP 553 266 B1 ist ein Verfahren zum Bestimmen der 3D-Koordinaten der Oberfläche eines Objekts bekannt, bei dem die 3D-Koordinaten der Oberfläche des Objekts durch ein 3D-Meßgerät bestimmt werden. Nach diesem Verfahren werden die Position und die Orientierung eines 2D-Laser-Scanners mit einem optischen Trackingsystem in zeitlich hoher Auflösung, beispielsweise mit etwa 100 Bildern pro Sekunde, bestimmt. Mit diesem Verfahren sind in einem Meßvolumen von etwa 4m x 4m x 6m Meßabweichungen von 0,1 bis 0,5 mm realisierbar.

Bei einem weiteren vorbekannten Verfahren werden die 3D-Koordinaten der Oberfläche eines Objekts durch ein optisches kamerabasiertes 3D-Meßgerät bestimmt, wobei die Position und die Orientierung dieses 3D-Meßgeräts nicht direkt bestimmt werden. Von dem 3D-Meßgerät werden einzelne Teil-Oberflächen vermessen, beispielsweise in einem Volumen von 1 m x 1 m x 1 m. Die 3D-Koordinaten der Teil-Oberflächen des Objekts werden anschließend zusammengesetzt, insbesondere durch ein in einem Rechner, beispielsweise einem PC, ausgeführtes Rechenverfahren. Hierfür gibt es mehrere Möglichkeiten:
Eine erste Möglichkeit besteht darin, die 3D-Koordinaten des Überlappungsbereichs von benachbarten Teil-Oberflächen durch ein Matching-Verfahren, das in der Fachliteratur auch als "Registrierung" oder als "Registrierverfahren" bezeichnet wird, zusammenzusetzen. Dabei werden Teil-Oberflächen, insbesondere strukturierte Teil-Oberflächen, mit einer Überlappung vermessen. Die Abstände der 3D-Koordinaten zweier Messungen benachbarter Teil-Oberflächen werden im Überlappungsbereich minimiert. Dies erfolgt softwaremäßig durch einen Matching-Algorithmus, bei dem eine Fehlerfunktion für Punkte des Überlappungsbereichs bestimmt und iterativ minimiert wird. Bei relativ kleinen, strukturierten Oberflächen können damit gute Ergebnisse erzielt werden. Bei großen Objekten sind aufgrund der Fehlerfortpflanzung allerdings nur Meßabweichungen von 0,2 bis 1,0 mm erreichbar.

Eine zweite Möglichkeit besteht darin, eine Transformation auf Referenzpunkte durchzuführen. In diesem Fall wird die Oberfläche des Objekts mit Referenzmarken versehen, beispielsweise beklebt. Die Referenzmarken werden mit einer Meßmaschine, insbesondere einer taktilen oder optischen Meßmaschine, eingemessen. Die Vermessung der Oberfläche oder einer Teil-Oberfläche erfolgt derart, daß mindestens drei der Meßmarken bei einer derartigen Einzelmessung erfaßt, nämlich photogrammetrisch vermessen werden. Aus den so erfaßten Meßmarken und deren vorher eingemessenen Positionen kann eine Transformation bestimmt werden. Wendet man diese Transformation auf die Einzelmessung an, so erhält man die Meßwerte der Oberfläche. Bei diesem Verfahren sind auch bei großen Objekten Meßabweichungen von 0,05 bis 0,2 mm erreichbar. Ein wesentlicher Nachteil besteht allerdings darin, daß das zu vermessende Objekt durch das Aufbringen der Referenzmarken zeitaufwendig vorbereitet werden muß.

Eine dritte Möglichkeit besteht darin, die erste und zweite Möglichkeit zu kombinieren, um den Aufwand der zweiten Möglichkeit zu verringern, gleichzeitig aber genauer als bei der ersten Möglichkeit zu werden, also geringere Meßabweichungen zu erreichen.

Aufgabe der Erfindung ist es, verbesserte Verfahren zum Bestimmen der 3D-Koordinaten der Oberfläche eines Objekts vorzuschlagen.

Erfindungsgemäß wird diese Aufgabe durch die Merkmale des Anspruchs 1 gelöst. In einem ersten Schrittt werden die 3D-Koordinaten einer Teil-Oberfläche des Objekts durch ein 3D-Meßgerät bestimmt wird. Dabei wird die Position des 3D-Meßgeräts durch ein Trackingsystem bestimmt. Hierzu sind an dem 3D-Meßgerät eine oder mehrere Detektoren vorgesehen oder angebracht oder mit diesem verbunden. In einem zweiten Schritt werden - vor oder nach dem ersten Schritt ― die 3D-Koordinaten einer benachbarten Teil-Oberfläche des Objekts durch das 3D-Meßgerät bestimmt. In einem dritten Schritt werden die 3D-Koordinaten eines Überlappungsbereichs oder des gesamten Überlappungsbereichs der benachbarten Teil-Oberflächen durch ein Matching-Verfahren zusammengesetzt. Bei dem Matching-Verfahren wird eine Fehlerfunktion bestimmt und vorzugsweise iterativ minimiert. Gemäß der Erfindung wird die Fehlerfunktion eines Detektors des 3D-Meßgeräts bestimmt. Hierdurch kann die Meßgenauigkeit bei der Bestimmung der 3D-Koordinaten der Oberfläche von verhältnismäßig großen Objekten verbessert werden.

Bei der praktischen Durchführung des Verfahrens besteht die komplette Vermessung des Objekts aus N Einzelmessungen, die sich jeweils überlappen, wobei N typischerweise eine Zahl zwischen 5 und 200 ist. Dabei muß die Position des 3D-Meßgeräts nur bei einer Einzelmessung durch das Trackingsystem bestimmt werden. In den meisten Anwendungsfällen bringt das erfindungsgemäße Verfahren allerdings nur dann eine Verbesserung, wenn die Position des 3D-Meßgeräts bei insgesamt mindestens zwei Einzelmessungen durch das Trackingsystem bestimmt wird. Vorteilhaft ist es, die Position des 3D-Meßgeräts bei vielen oder bei allen Einzelmessungen durch das Trackingsystem zu bestimmen.

Vorteilhafte Weiterbildungen sind in den Unteransprüchen beschrieben.

Vorteilhaft ist es, wenn ermittelt wird, ob die Fehlerfunktion des Detektors des 3D-Meßgeräts einen bestimmten Wert überschreitet. Der Wert der Fehlerfunktion beinhaltet die Abweichung des Detektors. Vorteilhaft ist es, zu ermitteln, ob der Absolutbetrag der Fehlerfunktion einen bestimmten Wert überschreitet. Es ist allerdings auch möglich, als Abweichung der Fehlerfunktion den Betrag in einer oder mehreren oder allen Richtungen zu verwenden, insbesondere in X-, Y- und/oder Z-Richtung. Der bestimmte Wert, der von der Fehlerfunktion überschritten wird, kann fest vorgegeben sein. Es ist allerdings auch möglich, diesen bestimmten Wert während der Durchführung des Matching-Verfahrens zu ermitteln. Der bestimmte Wert kann ein der Meßtoleranz des Trackingsystems entsprechender Wert sein.

Nach einer weiteren vorteilhaften Weiterbildung wird die Fehlerfunktion des Detektors des 3D-Meßgeräts in das Matching-Verfahren einbezogen. Besonders vorteilhaft ist es, wenn die Fehlerfunktion des Detektors des 3D-Meßgeräts dann in das Matching-Verfahren einbezogen wird, wenn die Fehlerfunktion des Detektors einen bestimmten Wert überschreitet.

Die Fehlerfunktion des Detektors kann mit einer bestimmten Gewichtung in das Matching-Verfahren einbezogen werden. Die Gewichtung kann größer oder kleiner, aber auch genauso groß wie diejenige der 3D-Koordinaten aus dem Überlappungsbereich sein. Der Wert der Gewichtung kann fest vorgegeben sein. Es ist allerdings auch möglich, den Wert der Gewichtung während der Durchführung des Matching-Verfahrens zu ermitteln und/oder zu verändern. Besonders vorteilhaft ist es, eine bestimmte Gewichtung der Fehlerfunktion des Detektors zu verwenden, wenn bzw. solange die Fehlerfunktion des Detektors einen bestimmten Wert nicht überschreitet, und eine andere Gewichtung zu verwenden, wenn bzw. sobald die Fehlerfunktion des Detektors einen oder den bestimmten Wert überschreitet. Insbesondere kann der Wert der Gewichtung derart festgelegt werden, daß die Fehlerfunktion des Detektors nicht in das Matching-Verfahren einbezogen wird, wenn bzw. solange die Fehlerfunktion des Detektors einen bestimmten Wert nicht überschreitet, und daß als Gewichtung der Fehlerfunktion des Detektors derselbe Wert wie für die 3D-Koordinaten aus dem Überlappungsbereich verwendet wird, wenn bzw. sobald die Fehlerfunktion des Detektors einen bestimmten Wert überschreitet.

Eine weitere vorteilhafte Weiterbildung ist dadurch gekennzeichnet, daß die Fehlerfunktionen mehrere Detektoren des 3D-Meßgeräts bestimmt werden. Vorteilhaft ist es, wenn ermittelt wird, ob die Fehlerfunktion eines oder mehrerer oder aller Detektoren einen bestimmten Wert überschreitet. Vorzugsweise wird diese Fehlerfunktion oder die größte Fehlerfunktion bei den beschriebenen vorteilhaften Weiterbildungen als maßgebende Fehlerfunktion verwendet.

Nach einer weiteren vorteilhaften Weiterbildung wird die Fehlerfunktion eines oder mehrerer oder aller Detektoren des 3D-Meßgeräts in das Matching-Verfahren einbezogen. Dies kann mit einer bestimmten Gewichtung geschehen.

Eine weitere vorteilhafte Weiterbildung ist dadurch gekennzeichnet, daß eine oder mehrere 3D-Koordinaten der Oberfläche des Objekts durch ein weiteres 3D-Meßgerät bestimmt werden, dessen Position durch ein Trackingsystem bestimmt wird. Bei dem Trackingsystem kann es sich um das dasselbe Trackingsystem handeln, durch das auch die Position des ersten 3D-Meßgeräts bestimmt wird. Es ist allerdings auch möglich, ein weiteres Trackingsystem zu verwenden. Durch das weitere 3D-Meßgerät werden insbesondere die 3D-Koordinaten eines oder mehrerer identifizierbarer Punkte auf der Oberfläche des Objekts bestimmt. Dabei kann es sich um einen oder mehrere ausgezeichnete Punkte handeln, die auf der Oberfläche des Objekts vorhanden sind. Stattdessen oder zusätzlich können als identifizierbare Punkte auch Referenzmarken auf der Oberfläche verwendet werden.

Nach einer weiteren vorteilhaften Weiterbildung werden einer oder mehrere oder alle durch das weitere 3D-Meßgerät bestimmten Punkte und/oder Detektoren in das Matching-Verfahren einbezogen. Dies kann in Form von Nebenbedingungen geschehen.

Ein Ausführungsbeispiel der Erfindung wird nachstehend anhand der beigefügten Zeichnung im einzelnen erläutert. In der Zeichnung zeigt
- Fig. 1: ein Objekt, ein 3D-Meßgerät und ein Trackingsystem in einer schematischen perspektivischen Darstellung und
- Fig. 2: die Anordnung gemäß Fig. 1 in einer schematischen Ansicht von oben.

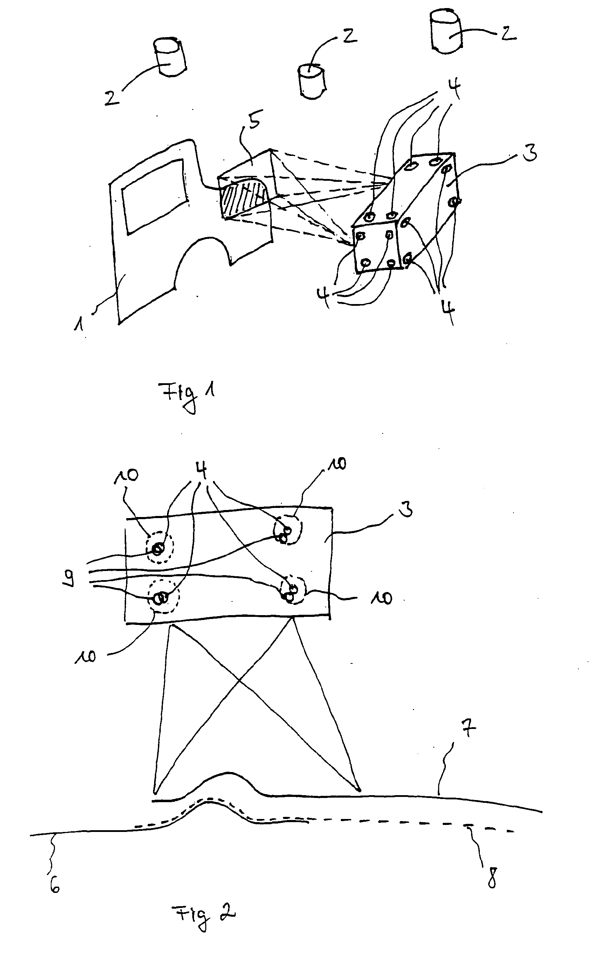

In der in Fig. 1 gezeigten Anordnung wird die Oberfläche eines Objekts 1 (Meßobjekt) durch ein 3D-Meßgerät 3 bestimmt, dessen Position durch ein Trackingsystem 2 bestimmt wird. Auf dem 3D-Meßgerät sind mehrere Detektoren 4 angeordnet, deren Position von dem Trackingsystem 2 bestimmt wird. Das 3D-Meßgerät bestimmt die 3D-Koordinaten einer Teil-Oberfläche 5 des Objekts 1.

Durch das Trackingsystem 2 werden die Position und die Orientierung des 3D-Meßgeräts 3 während und/oder unmittelbar vor und/oder unmittelbar nach der Bestimmung der 3D-Koordinaten der Teil-Oberfläche 5 bestimmt. Dies wird dadurch erreicht, daß auf dem 3D-Meßgerät 3 eine ausreichende Anzahl von Detektoren 4 vorgesehen sind, die mit dem 3D-Meßgerät 3 verbunden sind. Die Detektoren 4 können starr mit dem 3D-Meßgerät 3 verbunden sein. In bestimmten Anwendungsfällen kann es allerdings auch ausreichen, daß die Detektoren so angeordnet und montiert sind, daß der Bezug zum 3D-Meßgerät eindeutig ist und immer gleiche Meßwerte liefert. Beispielsweise können bei einem Laser-Trackingsystem Dachkant-Prismen oder Triple-Prismen als Detektoren verwendet werden. Diese Prismen können um ihre Achse drehbar gelagert werden, ohne daß die Meßwerte davon beeinflußt werden.

Um die Position und die Orientierung des 3D-Meßgeräts 3 bestimmen zu können, benötigt man entweder mindestens drei Detektoren 4, für die jeweils die Position bestimmt werden kann, oder mindestens einen Detektor 4, der sowohl die Position als auch die Orientierung liefern kann. Wenn das 3D-Meßgerät 3 im Erfassungsbereich des Trackingsystems 2 bewegt wird, liefert das Trackingsystem 2 für jeden Detektor 4 eine 3D-Koordinate. Wenn mindestens drei Koordinaten für drei Detektoren 4 vorliegen, können daraus die Position und die Orientierung des 3D-Meßgeräts 3 errechnet werden.

Verfügbare Trackingsysteme liefern Meßabweichungen im Bereich von 0,05 bis 0,1 mm bei der Bestimmung der Position einzelner Detektoren 4. Da ein optisches 3D-Meßgerät 3 im allgemeinen einen verhältnismäßig großen Abstand zur Oberfläche des Objekts 1 benötigt, der im Bereich von 400 bis 1600 mm, typischerweise bei 800 mm, liegen kann, und da weiterhin die Detektoren 4 aus praktischen Erwägungen nahe am 3D-Meßgerät 3 anzubringen sind, übersetzt sich dieser Einzelpunktfehler durch die "Hebelwirkung" in der Regel verhältnismäßig stark auf die gemessenen 3D-Koordinaten, wodurch sich in der Praxis die Meßabweichung auf 0,2 bis 1 mm reduziert.

Als 3D-Meßgerät 3 können auch mehrstufige Systeme eingesetzt werden, also beispielsweise ein System, das aus einem stationären System und einem von diesem System getrackten, handgehaltenen Scanner, beispielsweise einem Laser-Scanner, besteht. Es ist möglich, die Position und Orientierung des stationären Systems gemäß der Erfindung zu überwachen. Dadurch kann der Meßbereich dieses Systems signifikant vergrößert werden.

Das 3D-Meßgerät 3 kann ein optisches 3D-Meßgerät sein, insbesondere ein Laser-Meßgerät oder ein Weißlichtprojektionssystem. Es kann allerdings auch ein taktil arbeitendes Meßgerät sein. Zur Bewältigung der Meßaufgabe kann das 3D-Meßgerät 3 von einem Bediener manuell geführt werden. Es kann allerdings auch automatisch geführt werden, beispielsweise durch einen Roboter, eine Werkzeugmaschine, eine Meßmaschine oder ähnliches. Ferner ist es möglich, das 3D-Meßgerät 3 teilautomatisch zu führen. Hierbei ist die Genauigkeit der Bewegung ohne Einfluß auf die erreichbare Meßgenauigkeit.

Das Trackingsystem 2 deckt ein Erfassungsvolumen ab, das den Bewegungsbereich des 3D-Meßgeräts 3 umfaßt. Der Bewegungsbereich des 3D-Meßgeräts 3 wird durch die Größe, Struktur und Geometrie des Objekts 1 und durch die Beschaffenheit, insbesondere den Meßabstand des 3D-Meßgeräts 3 definiert. Wenn das Erfassungsvolumen des Trackingsystems 2 hierfür zu klein ist, können mehrere Trackingsysteme simultan oder zeitlich nacheinander eingesetzt werden, um auf diese Weise den Erfassungsbereich zu vergrößern. Stattdessen oder zusätzlich kann aber auch das Objekt 1 in zeitlich aufeinanderfolgend zu messende Teil-Oberflächen unterteilt werden; dann muß das Trackingsystem 2 in seiner relativen Position zum Objekt 1 nach der Erfassung einer Teil-Oberfläche neu ausgerichtet werden, und zwar derart, daß die nächste Teil-Oberfläche erfaßt werden kann.

Besonders geeignet sind Trackingsysteme auf der Basis des sogenannten Indoor-GPS, ähnlich dem rund um den Globus installierten GPS-System. Hierbei können auch beliebig große Hallen, bis hin zu Montagehallen für Flugzeuge, mit entsprechend vielen sogenannten Transmittern bestückt werden. Jeder einzelne Transmitter scannt einen Teil der Halle mittels Lichtebenen ab, die von dem Transmitter erzeugt werden. Die Verwendung mehrerer Transmitter stellt sicher, daß die gesamte Halle oder der erforderliche Teil der Halle mit diesen Lichtebenen abgescannt wird. Jeder Detektor 4 erkennt, wann Licht auftritt, und ermittelt aus einer zeitlichen Synchronisation mit dem Transmitter, zu welchem Ausmaß die Lichtebene zu diesem Zeitpunkt ausgelenkt war. Dadurch ist die Orientierung der Lichtebene im Raum bekannt, und es kann die 3D-Position des jeweiligen Detektors 4 ermittelt werden. Ein Ausführungsbeispiel ist in der US 6 630 993 B1 beschrieben. Mit dieser Technologie kann der Vorteil erreicht werden, daß auch große Hallen relativ preisgünstig als Meßräume verwendet werden können.

Besonders geeignet sind auch Trackingsysteme auf Triangulationsbasis oder Laser-Tracker. In Fig. 1 umfaßt das Trackingsystem 2 drei Meßaufnehmer, die zur Durchführung eines Triangulationsverfahrens zur Bestimmung der Position jedes Detektors 4 auf dem 3D-Meßgerät geeignet sind. Bei Verwendung eines Laser-Trackers genügt ein Meßaufnehmer.

Ferner können für das Trackingsystem auch andere Signale wie z.B. Ultraschall, IR (Infrarot) oder Laufzeitsignale herangezogen werden.

Die zu verwendenden Detektoren 4 werden durch das Trackingsystem 2 vorgegeben. Das Trackingsystem kann mit passiven oder aktiven Detektoren arbeiten. Die Detektoren 4 können mit optischen Detektoren (Lichtpulse, Lichtflecke, Marken, optische Laufzeitmessung, Theodolith-Meßverfahren etc.) oder mit anderen elektromagnetischen Wellen oder Signalen arbeiten. Je nach Trackingsystem können auch unterschiedlich geartete Meßaufnehmer simultan zum Einsatz kommen.

Vorzugsweise werden die ermittelten Positionen der Detektoren 4 zeitlich gemittelt, um das Meßrauschen abzusenken. Es ist ferner von Vorteil, vor, während und nach der Bestimmung der 3D-Koordinaten des Objekts 1 bzw. der Teil-Oberfläche 5 die Position der Detektoren 4 zu ermitteln, um auf diese Weise festzustellen, ob sich das 3D-Meßgerät 3 tatsächlich in Ruhe befunden hat.

Bei der Anordnung der Detektoren 4 auf dem 3D-Meßgerät 3 ist es von Vorteil, wenn diese Detektoren 4 möglichst gleichmäßig rund um das 3D-Meßgerät angeordnet sind. Dadurch wird sichergestellt, daß mindestens drei der Detektoren 4 bei beliebiger Orientierung des 3D-Meßgeräts 3 vom Trackingsystem 2 erfaßt werden. Es ist ferner von Vorteil, wenn die Distanz zwischen den Detektoren 4 möglichst groß gewählt wird, da sich Meßfehler, die sich bei der Positionsbestimmung der Detektoren 4 ergeben, bei der Bestimmung der Orientierung des 3D-Meßgeräts in Winkelfehler übertragen. Je größer die Distanz der Detektoren 4 gewählt ist, umso geringer ist die "Hebelwirkung" und damit die Fehlerfortpflanzung.

Vorteilhaft ist es, wenn in jeder Position des 3D-Meßgeräts 3 mehr als drei Detektoren 4 gleichzeitig erfaßt werden können. In diesem Fall kann man die Überbestimmung zur Verbesserung der Bestimmung der Position und Orientierung des 3D-Meßgeräts 3 nutzen (Mittelungseffekt). Ebenso kann man aufgrund der redundanten Information auch einzelne "Ausreißer" in den Positonsdaten erkennen.

Bei dem in Fig. 1 und 2 gezeigten Ausführungsbeispiel sind auf jeder Seite des 3D-Meßgeräts jeweils vier Detektoren 4 vorgesehen, die sich im Bereich der Ecken jeder Oberfläche befinden.

In Fig. 2 ist ein Schnitt 6 durch die erste Teil-Oberfläche 5 des Objekts 1 gezeigt. Die 3D-Koordinaten der Teil-Oberfläche 5 des Objekts 1 werden durch das 3D-Meßgerät 3 bestimmt, wobei die Position des 3D-Meßgeräts 3 durch das Trackingsystem 2 bestimmt wird.

Anschließend werden die 3D-Koordinaten einer benachbarten Teil-Oberfläche 7 des Objekts 1 durch Versetzen des 3D-Meßgeräts 3 bestimmt. Auch dabei wird die Position des 3D-Meßgeräts 3 durch das Trackingsystem 2 bestimmt; dies ist allerdings zur Durchführung der Erfindung nicht unbedingt notwendig.

Wie aus Fig. 2 ersichtlich, weichen die Positionen der ersten Teil-Oberfläche 6 und der zweiten Teil-Oberfläche 7 im Überlappungsbereich voneinander ab, und zwar aufgrund von Ungenauigkeiten der Bestimmung der 3D-Koordinaten durch das 3D-Meßgerät 3 und/oder der Bestimmung der Position und/oder Orientierung des 3D-Meßgeräts 3 durch das Trackingsystem 2. Zur Beseitigung des Abstandes zwischen der ersten Teil-Oberfläche 6 und der zweiten Teil-Oberfläche 7 werden die 3D-Koordinaten eines oder des Überlappungsbereichs der benachbarten Teil-Oberflächen 6, 7 durch ein Matching-Verfahren zusammengesetzt. Bei der Durchführung des Matching-Verfahrens wird eine Fehlerfunktion für Punkte des Überlappungsbereichs bestimmt und vorzugsweise iterativ minimiert. Durch das Matching-Verfahren werden im Beispiel der Fig. 2 die 3D-Koordinaten der zweiten Teil-Oberfläche 7 in die gestrichelt gezeichnete Positon 8 verschoben. Hier sind die Abstände der 3D-Koordinaten im Überlappungsbereich der benachbarten Teil-Oberflächen minimiert.

Durch die Verschiebung der 3D-Koordinaten der zweiten Teil-Oberfläche von der mit 7 bezeichneten Position in die mit 8 bezeichnete Position haben sich auch die Positionen der Detektoren 4 virtuell verschoben, und zwar von den mit 4 bezeichneten Positionen in die mit 9 bezeichneten Positionen. Nach dem erfindungsgemäßen Verfahren werden die Fehlerfunktionen der Detektoren 4 des 3D-Meßgeräts 3 bestimmt. Daraus werden die Absolutbeträge der Fehlerfunktionen bestimmt. Es wird ermittelt, ob die Absolutbeträge der Fehlerfunktionen der Detektoren 4 des 3D-Meßgeräts 3 einen bestimmten Wert überschreiten. Dieser bestimmte Wert ist in Fig. 2 als Kugel 10 mit einem bestimmten Radius um die Detektoren 4 eingezeichnet. Die Ermittlung, ob der Absolutbetrag der Fehlerfunktion der Detektoren 4 einen bestimmten Wert überschreitet, entspricht der Ermittlung, ob die virtuell verschobenen Positionen 9 der Detektoren 4 außerhalb der jeweiligen Kugel 10 um die ursprüngliche Lage des jeweiligen Detektors 4 liegen.

Im Beispielsfall der Fig. 2 liegen alle virtuell verschobenen Positionen 9 der Detektoren 4 innerhalb der jeweiligen Kugel 10. Die Absolutwerte der Fehlerfunktionen der Detektoren 4 überschreiten also den bestimmten Wert nicht.

Wenn eine der virtuellen Positionen 9 außerhalb der zugehörigen Kugel 10 liegt, wenn also die Fehlerfunktion eines Detektors 4 den bestimmten Wert überschreitet, wird die Fehlerfunktion dieses Detektors und/oder eines oder mehrerer oder aller weiteren Detektoren in das Matching-Verfahren einbezogen.

Bei der Durchführung des Matching-Verfahrens werden die Fehlerfunktionen der Detektoren 4 zunächst nicht in das Matching-Verfahren einbezogen. Mit anderen Worten werden die Fehlerfunktionen der Detektoren 4 mit der Gewichtung 0 in das Matching-Verfahren einbezogen. Wenn eine Einbeziehung der Fehlerfunktion eines oder mehrerer oder aller Detektoren in das Matching-Verfahren erfolgt, geschieht dies im Beispielsfall mit der Gewichtung 1. Der oder die Detektoren 4 werden also mit derselben Gewichtung in das Matching-Verfahren einbezogen wie die 3D-Koordinaten der Teil-Oberflächen 6, 7.

Durch die Erfindung kann eine insgesamt hohe Meßgenauigkeit erreicht werden, ohne daß es erforderlich ist, die Oberfläche des Objekts 1 zu verändern. Insbesondere müssen keine Referenzmarken aufgeklebt werden. Eine Vorbereitung des Objekts 1 ist nicht erforderlich. Dadurch eignet sich das erfindungsgemäße Verfahren zum Einsatz in einer Produktionslinie bei hohem Meßtakt.

Durch das erfindungsgemäße Verfahren kann sichergestellt werden, daß sich die vom Trackingsystem 2 bestimmte Position der Detektoren 4 maximal in einem bestimmten Toleranzvolumen 10 bewegt. Dadurch kann sichergestellt werden, daß sich Fehler beim Matching von einer zur nächsten Teil-Oberfläche nicht aufaddieren. Im Idealfall kann eine Gesamtmeßgenauigkeit erreicht werden, die der Meßgenauigkeit des Trackingsystems 2 entspricht. In bestimmten Anwendungsfällen kann sogar eine Gesamtmeßgenauigkeit erreicht werden, die größer ist als die Meßgenauigkeit des Trackingsystems.

Die Genauigkeit des Gesamtsystems kann auch dadurch gesteigert werden, daß ein weiteres 3D-Meßgerät verwendet wird, durch das eine oder mehrere 3D-Koordinaten der Oberfläche des Objekts bestimmt werden, wobei die Position und Orientierung des weiteren 3D-Meßgeräts durch ein Trackingsystem bestimmt wird. Dabei kann es sich um dasselbe Trackingsystem handeln, durch das auch die Position des ersten 3D-Meßgeräts bestimmt wird, oder um ein weiteres Trackingsystem. Es ist ferner möglich, mehrere weitere 3D-Meßgeräte zu verwenden. Einer oder mehrere oder alle durch das weitere 3D-Meßgerät bestimmte Punkte können in das Matching-Verfahren einbezogen werden. Bei dem weiteren 3D-Meßgerät kann es sich insbesondere um ein taktiles Meßgerät handeln, das Einzelpunkte auf dem Objekt 1 wesentlich genauer erfassen kann, da z.B. ein kürzerer Meßabstand gegeben ist. Vermißt man mit dem weiteren 3D-Meßgerät bestimmte identifizierbare Punkte (ausgezeichnete Punkte) der Oberfläche des Objekts mit höherer Genauigkeit, so kann auch diese Information in das Matching-Verfahren einfließen, insbesondere in Form von Nebenbedingungen.

Das Matching-Verfahren kann durch ein ICP-Verfahren (lterative Closest Point-Verfahren) durchgeführt werden oder durch ein Verfahren, das auf einem ICP-Verfahren basiert. Dabei wird für jeden Punkt einer Punktewolke ein korrespondierender Punkt in einer anderen Punktewolke bestimmt. Anschließend wird die Best-Fit-Transformation ermittelt, die die Punkte aufeinander transformiert. Hierbei wird eine Fehlerfunktion verwendet, die minimiert wird, wobei die Fehlerfunktion den Abstand der jeweils korrespondierenden Punkte voneinander beschreibt.

Bei der Durchführung des Matching-Verfahrens wird die Fehlerfunktion iterativ minimiert. Gängige Verfahren hierzu sind beispielsweise die Verfahren Levenberg-Marquardt, quasi-Newton, steepest descent oder conjugate gradient. Die iterative Minimierung läuft typischerweise wie folgt ab:
Setze die aktuellen Parameter aus den Startwerten;
Wiederhole:
   Bestimme neue Parameter, die einen geringeren Funktionswert der Fehlerfunktion erzeugen;
Solange, bis ein Abbruchkriterium erfüllt ist.

Ein typisches Abbruchkriterium liegt vor, wenn die Veränderung des Funktionswertes geringer ist als eine vorgegebene Schwelle oder wenn die Anzahl der Iterationen eine vorgegebene Schwelle überschreitet.

Gemäß der Erfindung kann die Fehlerfunktion aus zwei Anteilen bestehen, nämlich aus den Abweichungen der Punktewolken, also den Punkten aus dem Überlappungsbereich benachbarter Teil-Oberflächen 6, 7, und aus den Abweichungen der getrackten Punkte, also eines oder mehrerer Detektoren. Durch die Kombination beider Anteile kann sichergestellt werden, daß sich die Punktewolke bei der Durchführung des Matching-Verfahrens nicht aus einem zugelassenen Bereich herausbewegt. Die Kombination der beiden Abweichungen kann durch eine gewichtete Addition gebildet werden. Dabei kann die Gewichtung so justiert werden, daß der Anteil einer getrackten Punkt-zu-Punkt-Korrespondenz (Detektor-Korrespondenz) größer wird als der Anteil der Punktewolke (im Überlappungsbereich benachbarter Teil-Oberflächen), wenn und/oder sobald die Punkt-zu-Punkt-Abweichung (Detektor-Abweichung) der getrackten Punkte den jeweiligen Toleranzbereich verläßt. Die Gewichtung kann insbesondere wie folgt durchgeführt werden: Solange der Toleranzbereich der Punkt-zu-Punkt-Abweichung (Detektor-Abweichung) nicht überschritten wird, ist die zugehörige Gewichtung null; wenn und/sobald dieser Toleranzbereich überschritten wird, ist die zugehörige Gewichtung 1.

## Patentansprüche

1. Verfahren zum Bestimmen der 3D-Koordinaten der Oberfläche eines Objekts, bei dem
die 3D-Koordinaten einer Teil-Oberfläche (5, 6) des Objekts (1) durch ein 3D-Meßgerät (3) bestimmt werden, das einen oder mehrere Detektoren (4) aufweist und dessen Position durch ein Trackingsystem (2) bestimmt wird,
die 3D-Koordinaten einer benachbarten Teil-Oberfläche (7) des Objekts (1) durch das 3D-Meßgerät (3) bestimmt werden,
die 3D-Koordinaten eines Überlappungsbereichs der benachbarten Teil-Oberflächen (5, 6, 7) durch ein Matching-Verfahren, bei dem eine Fehlerfunktion bestimmt und minimiert wird, zusammengesetzt werden
und die Fehlerfunktion eines Detektors (4) des 3D-Meßgeräts (3) bestimmt wird.

2. Verfahren nach Anspruch 1, **dadurch gekennzeichnet, daß** ermittelt wird, ob die Fehlerfunktion des Detektors (4) des 3D-Meßgeräts (3) einen bestimmten Wert (10) überschreitet.

3. Verfahren nach einem der vorhergehenden Ansprüche, **dadurch gekennzeichnet, daß** die Fehlerfunktion des Detektors (4) des 3D-Meßgeräts (3) in das Matching-Verfahren einbezogen wird.

4. Verfahren nach Anspruch 3, **dadurch gekennzeichnet, daß** die Fehlerfunktion des Detektors (4) mit einer bestimmten Gewichtung in das Matching-Verfahren einbezogen wird.

5. Verfahren nach einem der vorhergehenden Ansprüche, **dadurch gekennzeichnet, daß** die Fehlerfunktionen mehrerer Detektoren (4) des 3D-Meßgeräts (3) bestimmt werden.

6. Verfahren nach Anspruch 5, **dadurch gekennzeichnet, daß** die Fehlerfunktion eines oder mehrerer oder aller Detektoren (4) des 3D-Meßgeräts (3) in das Matching-Verfahren einbezogen wird.

7. Verfahren nach einem der vorhergehenden Ansprüche, **dadurch gekennzeichnet, daß** eine oder mehrere 3D-Koordinaten der Oberfläche des Objekts (1) durch ein weiteres 3D-Meßgerät bestimmt werden, dessen Position durch ein oder das Trackingsystem (2) bestimmt wird.

8. Verfahren nach Anspruch 7, **dadurch gekennzeichnet, daß** einer oder mehrere oder alle durch das weitere 3D-Meßgerät bestimmten Punkte und/oder Detektoren in das Matching-Verfahren einbezogen werden.
